# EUROPEAN PATENT SPECIFICATION

(11) **EP 4 381 458 B1**
(45) Date of publication and mention of the grant of the patent: **08.07.2026**
(21) Application number: 22754253.7
(22) Date of filing: 25.07.2022
(51) Int. Cl.: G06T 1/00

(54) **SYSTEM AND METHOD OF DIGITAL WATERMARKING**
SYSTEM UND VERFAHREN ZUR DIGITALEN WASSERZEICHENMARKIERUNG
SYSTÈME ET PROCÉDÉ DE FILIGRANAGE NUMÉRIQUE

(30) Priority: 02.08.2021 EP 21189088; 02.08.2021 US 202163228220 P
(43) Date of publication of application: 12.06.2024
(73) Proprietor: Dolby Laboratories Licensing Corporation, San Francisco, CA 94103 (US)
(72) Inventor: SHIELDS, Jerome D., San Francisco, California 94103 (US)
(74) Representative: Dolby International AB Patent Group Europe
(86) International application number: PCT/US2022/038173
(87) International publication number: WO 2023/014530

(56) References cited:
- US-A1- 2021 233 454
- RAYMOND B WOLFGANG ET AL: "Perceptual Watermarks for Digital Images and Video", PROCEEDINGS OF THE IEEE, IEEE. NEW YORK, US, vol. 87, no. 7, 1 July 1999 (1999-07-01), XP011044240, ISSN: 0018-9219
- ANONYMOUS ET AL: "Perceptual quantizer - Wikipedia", 10 June 2021 (2021-06-10), pages 1 - 3, XP055881732, Retrieved from the Internet <URL:https://en.wikipedia.org/w/index.php?title=Perceptual_quantizer&oldid=1027814388> [retrieved on 20220120]

## Description

### CROSS-REFERENCE TO RELATED APPLICATIONS

This application claims the benefit of priority from U.S. Provisional Patent Application Ser. No. 63/228,220, filed on August 2, 2021, and European Patent Application Ser. No. 21189088.4, filed on August 2, 2021.

### FIELD OF INVENTION

Embodiments described herein relate to visual anti-theft protection. More specifically, embodiments described herein provide systems and methods of creating digital watermarks to identify illicit copying of visual works.

### BACKGROUND

It is a known problem that pirates illicitly record content such as movies, concerts and proprietary events. Often, copies of these recordings are sold for profit by the pirates or distributed for free (for example, over the internet), depriving revenue to the rightful owners of the content. Existing methods of inhibiting unauthorized copying of copyrighted works operated at a machine level to prevent a recorder machine from making unauthorized copies. However, these methods do not prevent live copying of copyrighted works. Furthermore, existing methods of inhibiting live copying of copyrighted works are not universally effective on all video signals.

Techniques for watermarking digital images and video are disclosed in "Perceptual Watermarks for Digital Images and Video" (Raymond et al, PROCEEDINGS OF THE IEEE, US, vol. 87, no. 7, 1 July 1999, ISSN: 0018-9219).

### SUMMARY

The present disclosure provides for systems and methods for creating a digital watermark in accordance with the independent claims. Embodiments provided herein include a digital watermarking method acording to claim 1.

Embodiments provided herein include a system for creating a digital watermark, according to claim 12.

Other aspects will become apparent by consideration of the detailed description and accompanying drawings.

### BRIEF DESCRIPTION OF THE DRAWINGS

FIG. 1A is a graph illustrating the difference in perceptions of luminance between a human eye and a camera.
FIG. 1B illustrates the effectiveness of an exemplary luminance level encoding function in creating an even distribution of "just noticeable difference" (JND) steps across a luminance range.
FIG. 2 is a graph schematically illustrating the operation of a Perceptual Quantizer (PQ) level encoding function across a luminance range and illustrating force components for determining a strength of a watermark.
FIG. 3A provides an exemplary watermark image which is polarized according to a first polarity.
FIG. 3B illustrates the watermark image of FIG. 3A polarized according to a second polarity.
FIG. 4 is a flow chart of a method of creating a digital watermark according to one embodiment of the disclosure.
FIG. 5 is a flow chart of a method of creating a digital watermark according to one embodiment of the disclosure.
FIG. 6 is a schematic diagram of a system for creating a digital watermark according to one embodiment of the disclosure.
FIG. 7 is a schematic diagram of another system for creating a digital watermark according to one embodiment of the disclosure.
FIG. 8 is a schematic diagram of another system for creating a digital watermark according to one embodiment of the disclosure.
FIG. 9 is a schematic diagram of another system for creating a digital watermark according to one embodiment of the disclosure.

### DETAILED DESCRIPTION

It should be noted that a plurality of hardware and software-based devices, as well as a plurality of different structural components may be utilized to implement the embodiments described herein or portions thereof. In addition, it should be understood that embodiments described herein may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects described herein may be implemented in software (stored on non-transitory computer-readable medium) executable by one or more processors. As such, it should be noted that a plurality of hardware and software-based devices, as well as a plurality of different structural components may be used to implement the embodiments described herein. For example, "controller," "control unit," and "control assembly" described in the specification may include one or more processors, one or more memory modules including non-transitory computer-readable medium, one or more input/output interfaces, and various connections (for example, a system bus) connecting the components. Furthermore, as used herein, the terms "movie," "video," "video signal," and the like are intended to refer to image data or an image signal including a series of visual images.

### Deterring Unauthorized Copying via Digital Watermarking

The present application addresses the problem of pirates or other nefarious actors creating illicit copies of videos, movies, and other visual works having a series of visual images. Provided herein is a system and method of embedding or overlaying a digital watermark signal into a video signal to detect and/or inhibit unauthorized copies of visual works. Previous methods of detecting and inhibiting unauthorized copying of such works operated at a machine level by preventing a recording machine (e.g., a DVD player or video recorder) from creating a copy, or at least an undistorted copy. However, these methods do not prevent live copying of a video image on an image capturing device (e.g., camera). For example, these methods do not prevent a person from recording a movie in a cinema using a camera or cell phone.

Therefore, newer methods of deterring unauthorized copying involve embedding a digital watermark into the movie so that the watermark may be identified even when a pirate records a live movie. When creating a digital watermark, an important consideration is the strength of the watermark, where strength is generally understood to refer to the magnitude of the change in luminance of the movie (or of any other original image to which the watermark is applied) due to the embedding of the digital watermark. Specifically, an effective digital watermark should be generally invisible or not be easily perceptible to the human eye but should be strong enough to be recovered and/or detected by a camera. It is undesirable for the embedded watermark to be so strong that it is visible to the human eye and detracts from the enjoyment of the movie by authorized viewers, such as patrons in a cinema. Likewise, it is undesirable for the watermark to be so weak that it may not be detected by an electronic processor in order to identify illicitly obtained copies of the visual works.

Existing methods of creating a digital watermark are not universally successful in achieving an appropriate strength of a watermark on all types of video signals. In particular, some existing methods of creating a digital watermark to inhibit live unauthorized copying of video images are not ideal for video images of all brightness ranges. Likewise, existing methods of creating digital watermarks are not ideal for video images that are luminance encoded using certain transfer functions. For example, some existing digital watermarking techniques are not optimized for high dynamic range (HDR) video images. Some playback devices (such as projectors) insert a watermark into movies at showtime. These devices are designed to embed a watermark into movies with limited brightness ranges, such as Standard Dynamic Range (SDR) video images. The existing methods of embedding a watermark into a movie operate on movies that are DCI gamma encoded according to the DCI Digital Cinema System Specification. However, the existing methods of embedding a watermark into a video are insufficient with HDR video images. Similarly, some existing methods of embedding a watermark into a movie are not ideal when applied to video images that are encoded using luminance encoding functions other than gamma encoding functions. For example, some existing digital watermarking techniques are not ideal for video images that are luminance encoded using a Perceptual Quantizer (PQ) transfer function. Specifically, some of the existing digital watermarking methods produce a watermark that is either too strong, such that the watermark is visible to the human eye and disruptive to the authorized viewers, or is too weak, such that the watermark is difficult to recover.

Accordingly, provided herein is a system and method of embedding a watermark signal into a video signal or other signal including a series of visual images, such that the watermark (signal) is not visible to the human eye but is recoverable by an electronic processor and/or an image capturing device. The method takes advantage of the difference between the capability of the human eye to perceive images and an image recording device's ability to capture the image by adjusting the strength of the watermark to fall within this range. The disclosed watermarking method is operable on HDR video images. The disclosed watermarking system is also operable on video images that are luminance encoded using a quantized transfer function, such as a PQ transfer function. An example PQ mapping function is described in SMPTE ST 2084:2014 "High Dynamic Range EOTF of Mastering Reference Displays" (hereinafter "SMPTE"), In some instances, the watermark signal may include identification information regarding the location and/or vendor who transmitted the original authorized video signal.

### Luminance Level Encoding

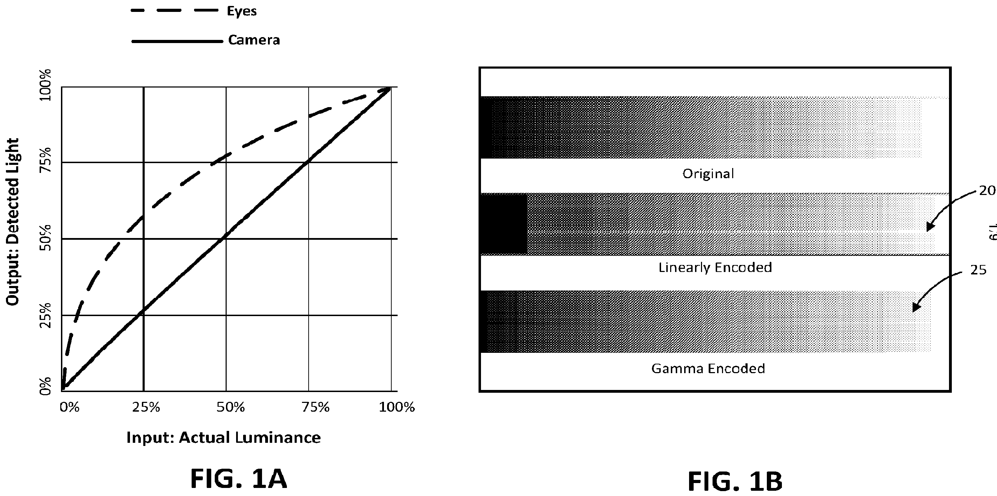

The underlying theory behind luminance level encoding stems from the difference between "luminance," which is a physical measurable quantity, and "brightness," which is a human perception of luminance. Simply put, human eyes do not perceive light in the same way as cameras do. As shown in FIG. 1A, the output signal of a camera varies linearly with a change in luminance. For example, when twice as many photons hit a sensor, the camera's output signal will double. However, humans do not perceive a change in luminance as having a linear relationship with a change in brightness. Rather, as perceived by a human, brightness is similar to a square root function of luminance. Therefore, as shown in FIG. 1A, when twice as many photons hit a person's eye, that person will not detect twice the brightness. Rather, the person will detect a brightness increase that is less than twice the brightness.

The sensitivity of the human visual system to additive or subtractive luminance changes is significantly higher at low luminance levels than at high luminance levels. Thus, the human visual system may be able to perceive a difference between a pair of relatively low luminance values that differ by an amount of nits, but be unable to perceive a difference between a pair of relatively high luminance that differ by the same amount of nits. In general, human vision only perceives a difference if the luminance values differ by at least what is referred to as a "just noticeable difference" (JND). Due to the nonlinear perception of human vision between luminance and brightness, the magnitude of the JND varies across a range of light levels and is generally smaller at lower luminance levels and higher at higher luminance levels.

Therefore, to better represent how a human perceives light, video images may be encoded via luminance level encoding. Referring to FIG. 1B, encoded image data with luminance quantization steps of equal sizes or linearly scaled sizes does not match the perceptual nonlinearity of human vision. Encoded image data with luminance quantization steps at a fixed size across the luminance range also does not match with perceptual nonlinearity of human vision. The result of a linear luminance encoding function is illustrated in FIG. 1B as element 20. Under these techniques, when code words are assigned to represent quantized luminance values, too many code words may be distributed in a particular region (e.g., the bright region) of the range of light levels, while too few code words may be distributed in a different region (e.g., the dark region) of the range of light levels. In the overpopulated region, a multitude of code words may not produce perceptual differences, and are, for all practical purposes, therefore wasted. In the underpopulated region, two adjacent code words may produce a perceptual difference much greater than a JND, and possibly produces contour distortion (also known as banding) visual artifacts.

However, when luminance quantization steps are varied to match the perceptual nonlinearity of human vision, then code words can be adjusted to have a 1 to 1 correlation with the JND steps. In other words, each code word produces a perceptual difference that is equal to (or just below) a JND. Different types of luminance level encoding formulas attempt to accomplish this goal. The result of a non-linear luminance encoding function is illustrated in FIG. 1B as element 25. These luminance encoding functions may generally be referred to as electro-optical transfer functions (EOTF), opto-electronic transfer functions (OETF), or opto-optical transfer functions (OOTF), depending on whether the scene light is the input or the video signal is the input. For example, some video images are encoded using a gamma function (e.g., DCI gamma encoding) or a logarithmic function to encode the video signal. Other video images are encoded using a PQ transfer function to encode the video signal.

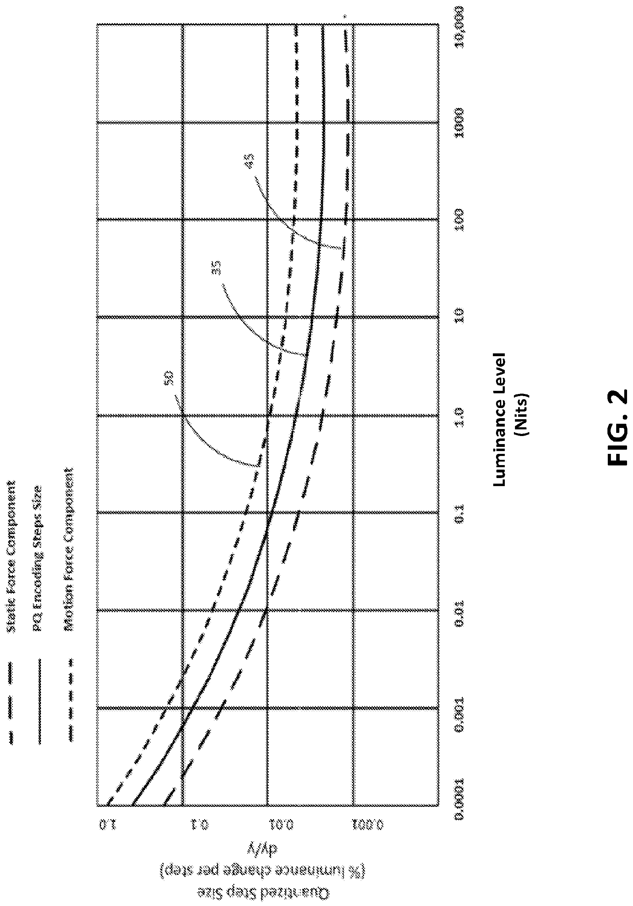

FIG. 2 graphs various functions across a luminance range. The x-axis represents a luminance range from 0.0001 nits to 10,000 nits. The y-axis represents quantized step size. As previously discussed, to better represent the human perception of light, each quantized step is not equal to one another. Rather, the change in luminance between each step may be varied in order to match human perception of light. Therefore, the y-axis indicates the increase or decrease (i.e., the change) in luminance between each step at a particular luminance level (i.e., across the x-axis). The change in luminance between each step is provided as a percentage. For example, in the higher luminance levels and for the Perceptual Quantizer (PQ) function 35, the percent change in luminance between steps is roughly 0.25%. This means that at the higher luminance levels, a person will be able to identify a change in luminance with an increase or decrease of 0.25%. In the lower luminance levels and for the PQ function 35, the percent change in luminance between steps is more varied, and approaches or exceeds a 10% change in luminance between steps. While the percent change in luminance for a first JND at a low luminance level is greater than the percent change in luminance for a second JND at a high luminance level, one should keep in mind that the absolute change in luminance for the first JND is less than the absolute change in luminance for the second JND (since the first JND is at a lower luminance level than the second JND).

With continued reference to FIG. 2, luminance level encoding functions do not apply universally to all luminance ranges. For example, a gamma encoding function only operates on standard dynamic ranges (SDR) of luminance, which ranges from roughly 0.001 to 100 nits. The gamma encoding function does not well represent JNDs across high dynamic ranges (HDR) of luminance, which ranges from roughly 0.0001 nits to 10,000 nits. Instead, HDR videos may be encoded using other types of luminance level encoding functions. For example, HDR may be encoded using a Perceptual Quantizer PQ function 35. As shown in FIG. 2, the PQ function 35 applies across an HDR of luminance.

Existing methods of creating a digital watermark are not optimized to produce the strongest invisible watermark for video signals encoded by certain luminance level encoding processes. For example, some existing digital watermarking techniques are not optimized for video signals encoded using a quantized luminance level encoding function, such as a PQ luminance level encoding function 35. Likewise, some existing digital watermarking techniques are not optimized for video signals with high dynamic ranges. In particular, some existing digital watermarking techniques have been unsuccessful in creating a watermark that is both invisible to the human eye, and strong enough to be reliably recovered by an electronic processor. Rather, when applied to video signals encoded by certain luminance level encoding functions, the watermark is either visible to the human eye or not reliably recoverable and identifiable. Accordingly, provided herein is a method of creating a digital watermark that is effective on an HDR video signal. Furthermore, provided herein is a method of creating a digital watermark that is effective on video signals that are encoded using a quantized luminance level encoding function, such as a PQ luminance encoding function 35. The method described herein, provides for unexpected results in the watermark quality and consistency across the luminance range, which was not previous possible using prior watermarking methods. Furthermore, the method provided herein simplifies the process of creating a digital watermark and provides for a clean formulaic approach that can be easily applied to HDR video images.

### Methods of Creating a Digital Watermark

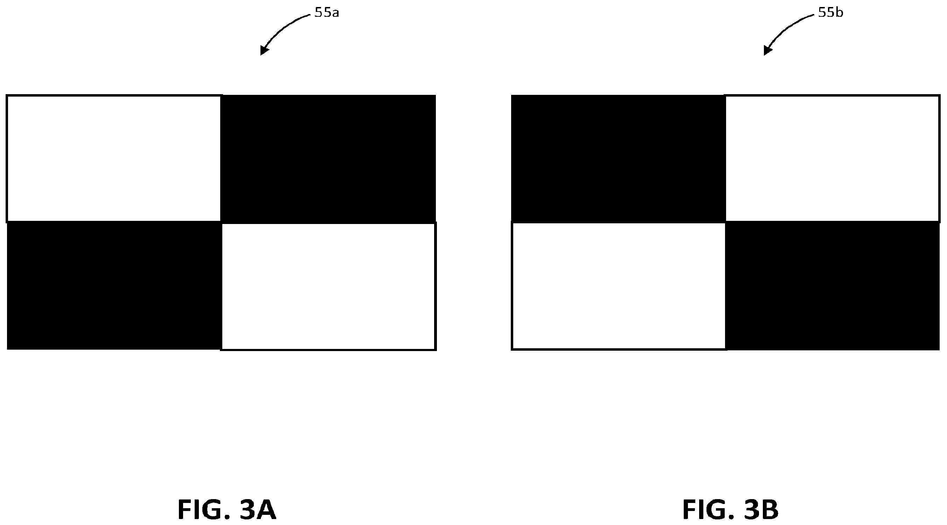

As mentioned, a watermarking system may add an invisible watermark image to a video signal to help identify unauthorized copies of visual works such as movies. FIGS. 3A and 3B provide an exemplary watermark image, which may be used to mark visual works. A watermark image signal including the watermark image may be embedded into the video signal so that data can be recovered from a copy of the video. The presence of the watermark alone may indicate that the video is an unauthorized copy. Furthermore, the watermark may include additional information indicating where the movie was copied (e.g., which cinema the movie was copied from), or the timeframe in which the movie was copied.

The digital watermark may be embedded into the video signal as binary data by varying the watermark image according to a binary bitstream such that a watermark image sequence (e.g., a sequence of interleaved watermark images 55a and 55b) is created. The watermark image may be modulated by the bitstream. Each frame of the watermark image sequence may represent one or more data bits, with watermark image 55a representing a zero and watermark image 55b representing a one (or vice-versa). Temporally modulating a watermark image allows for a way to extract the watermark from a copy of the movie.

In some embodiments, the watermark image may be a fixed image, which is modulated by changing its polarity (as shown via watermark images 55a and 55b). For example, FIGS. 3A and 3B, illustrate two polarities of an exemplary watermark (watermark images 55a and 55b) Specifically, FIG. 3A illustrates the watermark 55a having first polarity, such as a positive polarity, and FIG. 3B illustrates the watermark 55b having a second polarity, such as a negative polarity. The watermark image signal may modulate the watermark image by changing polarity between the first polarity and the second polarity for each frame in the watermark image sequence. For example, in a first frame of a movie, a data bit of '1' may add some positive intensity (watermark image 55a) to the movie frame. In a second frame of the movie a data bit of '0' may add some negative intensity (watermarking image 55b). This process may repeat for a movie sequence, embedding the data bitstream by adding positive and negative amounts intensity to the watermark images 55a and 55b on a frame-by-frame basis according to the data bits. In other embodiments, the watermark may be a sequence of moving images, possibly related to the actual movie images, modulated by changing polarity or modulated by some other method. Furthermore, in other embodiments, the watermark may be a combination of a fixed image and moving images.

As previously mentioned, an important property of an effective watermark is the strength of the watermark image (e.g., the luminance change in the movie or other image resulting from the embedding of the modulated watermark image). If the watermark is too strong, it will be visible to a viewer or will create a flickering effect (as the polarity of the watermark is modulated, and hence the luminance of the movie is brightened and darkened in consecutive frames). If the watermark is too weak, it will be difficult to recover and obtain the data desired to identify unauthorized copies. Therefore, it is desirable to create a watermark that has a strength which is just below a person's ability to see the watermark or a flickering effect. It is noted that motion in the sequence of moving images to which the watermark is applied may reduce a person's ability to perceive the watermark or a flickering effect. The level at which a person may begin to see a watermark may be referred to as the critical level, or a critical modulation level for modulated watermarks. The critical modulation level is an important consideration when designing a watermark. An effective watermark should have a strength that approaches but remains below the critical level.

In some embodiments, the critical level of a watermark across a luminance range follows a similar curve as the quantized luminance level encoding function, in this case, the PQ luminance level encoding function 35. Therefore, the quantized luminance level encoding function 35 may be used as a guide for determining the strength of the watermark such that the watermark signal approaches the appropriate critical level. In particular, the strength of the watermark may be adjusted proportionally to the quantized luminance level encoding function 35. For example, the watermark strength may be adjusted by at least one weighting factor that is a predetermined number of quantized steps. Adjusting the strength of the watermark signal by applying a function which is proportional to the quantized luminance level encoding function 35 results in a simpler system that produces watermark levels that approach a critical level over a larger range of luminance values. In other words, adjusting the strength of the watermark signal proportionally to the step size of the PQ luminance function, results it a more effective watermark and a watermark that is effective over a greater luminance range.

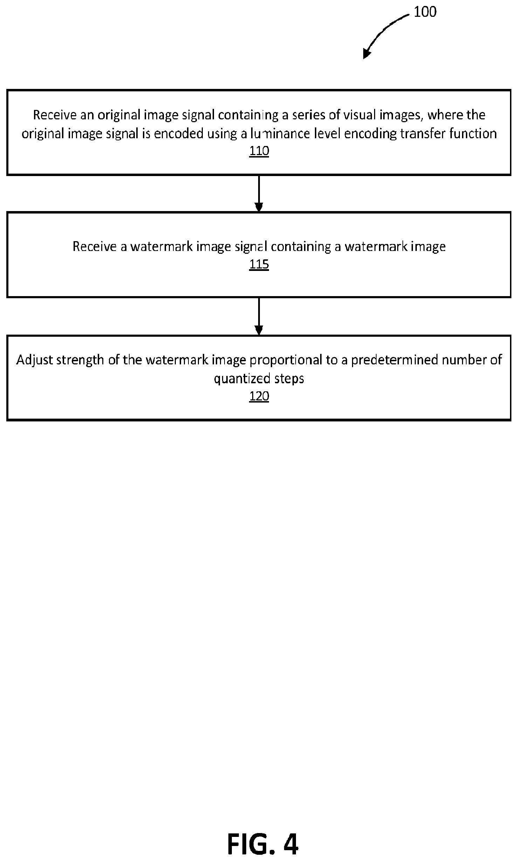

FIG. 4 illustrates a method 100 of creating a digital watermark for use with an original image (video) signal including a series of original visual images. The method 100 may be executed by one or more controller having an electronic processor. The method 100 includes receiving an original image (video) signal having a series of original visual images where the original image (video) signal is encoded using a luminance level encoding transfer function (step 110). The original image (video) signal may be a movie or a video including a series of original visual image, which are perceivable to a human eye. The original image (video) signal may be luminance encoded using a PQ transfer function. The method 100 further includes receiving a watermark image signal having a watermark image (step 115). The watermark image may be a geometrical shape, a symbol, a word, or other identifiable mark that may assist in the identification of visual works. In some embodiments, the watermark image is a fixed image which retains a constant shape. In other embodiments, the watermark image is a sequence of moving images in which the watermark shifts relative location or changes shape. In other embodiments, the watermark image is an image sequence related to the original image sequence. The method 100 further includes adjusting a strength of the watermark image proportional to a predetermined number of quantized luminance level encoded steps (120). In some embodiments, the strength of the watermark image may be adjusted proportional to a predetermined number of PQ steps. The strength of the watermark may be adjusted by adjusting the amplitude of the watermark signal.

In some embodiments, the watermark may be adjusted and/or modulated at a local level. For example, the strength of the watermark may be adjusted at a pixel by pixel level such that each pixel is adjusted independently. As another example, the polarity of the watermark may be adjusted on a pixel by pixel level.

Referring back to FIG. 2, the strength of the watermark may be adjusted based on a weighting factor that operates on the PQ luminance level encoding function 35 such that the strength of the watermark over the luminance range is proportional to the PQ luminance level encoding function 35. For example, the weighting factor may be set to a predetermined number of PQ steps. Since the PQ luminance level encoding function follows a similar curve as the critical level, the weighting factor will also be roughly proportional to the critical level over the luminance range, thus accomplishing the goal of approaching the critical level over the luminance range. Furthermore, by basing the weighting factor on the PQ luminance level encoding function 35, the watermark is capable of being effectively adjusted over a greater luminance range, such as HDR images. For example, in some embodiments, the watermark strength may be adjusted proportional to a predetermined number of PQ steps across a luminance range of 0.001 nits to 1,000 nits. As another example, in some other embodiments, the watermark strength may be adjusted by a predetermined number of PQ steps across a luminance range of 0.0001 nits to 10,000 nits. In other embodiments, the watermark strength may be adjusted by a predetermined number of PQ steps across a luminance range of 0.01 nits to 50 nits. In some other embodiments, the watermark strength may be adjusted by a predetermined number of PQ steps across a luminance rage of approximately 0.0 nits to 100 nits. On the other hand, a weighting factor which is based on an encoding function that is used for SDR images, such as a gamma function, will not produce a watermark whose strength is proportional to the PQ step size or critical level over the luminance range. Therefore, a weighting factor which is based on a function such as a gamma transfer function may produce a watermark strength that is too strong over one part of the luminance range or too weak over another part of the luminance range.

In addition, the strength of the watermark may be adjusted by a weighting factor which includes a static force component 45 and a motion force component 50. For example, the strength of the watermark may be adjusted by the following formula: *f* = *sf + mf*, where *f* is the modulation level (or force), *sf* is the static force component, and *mf* is the motion force component. Furthermore, in some embodiments, the weighting factor of the static force component 45 may be a predetermined number of quantized luminance level encoded steps. The static force component 45 of the watermark may always be present and may be independent of the level of movement in the movie images. For example, the static force component 45 may be invisible, regardless of the level of movement in the movie images, by maintaining the modulation level below the critical level. In some embodiments, the static force component 45 may be set to a constant, where the modulation level of the watermark over the luminance range is proportional to a number of PQ steps, and thus, the critical level.

The motion force component 50 of the weighting factor depends on the frame-to-frame motion in the movie images. A stronger watermark may be allowed in regions of the image with motion because the motion inhibits the visibility of the watermark and the flicker effect. Therefore, the more motion occurring over a region, the stronger the watermark may be in that region. To apply a stronger watermark when greater motion allows, the strength of the motion that inhibits the visibility of the watermark should be measured, and the strength of the watermark adjusted accordingly. Because the motion that inhibits the visibility of the watermark has visual properties so closely related to the visibility of the watermark, the motion strength may be measured in units proportional to critical level and PQ step size over the luminance range. By the same reasoning, the strength of the watermark may be adjusted in units proportional to critical level and PQ step size over the luminance range. The sizing of units over the luminance range is noteworthy. Quantities are being adjusted and measured in units that are sized over the luminance range to be proportional to the sensitivity over the luminance range of a property of human vision. That property being the visibility of the watermark image sequence, represented by the magnitude over the luminance range of the critical modulation level. This sizing of units facilitates and simplifies making the strongest watermark that is invisible.

The motion force component 50 of the weighting factor may involve spatial and temporal processing of movie images. Like the static force component 45, the motion force component 50 may be adjusted based on the PQ luminance level encoding function. In particular and depending on the measured level of motion in an area of the original image sequence, the motion force component 50 may be, in that area, proportional to PQ quantized luminance level encoded steps. For example, the motion may be measured as a change in PQ quantized luminance level encoding steps between a first image in a series of images and a second image in the series of images, and the motion force component 50 adjusted by an amount proportional to the measured level. By making the motion measured proportional to PQ step size and the motion force component 50 of the weighting factor adjusted proportional to PQ step size, the motion and motion force component 50 both better represent the associated visual properties over the luminance range. When optimizing for the strongest-but-not-visible watermark, the computation of the motion force component 50 may also be simplified. Additionally, the motion is more easily measured perceptually, and the modulation is more easily generated proportional to critical modulation levels.

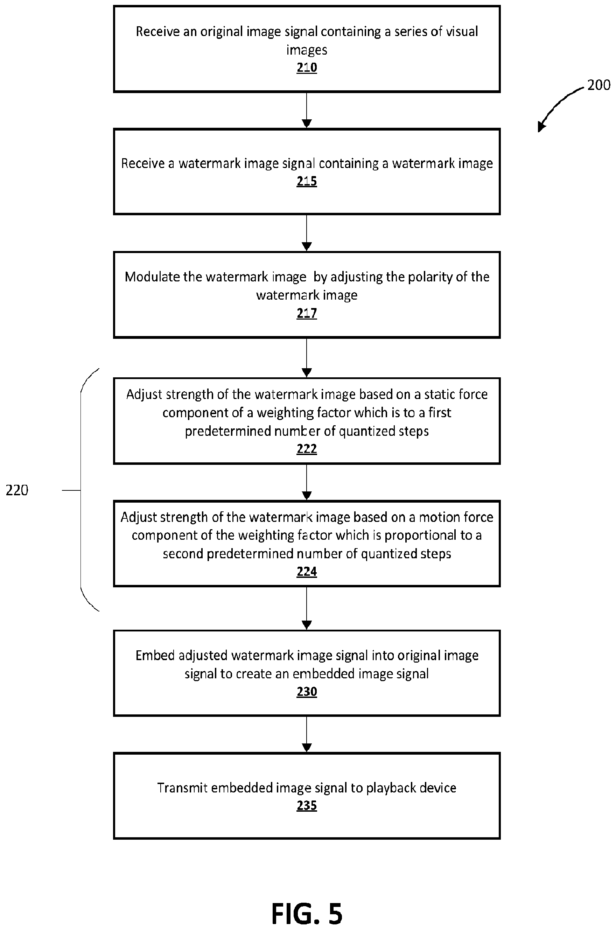

FIG. 5 illustrates another exemplary method 200 of creating a digital watermark for use with an original image (video) signal including a series of original visual images. The method 200 may be executed by one or more controller having an electronic processor. The method 200 includes some similar steps as method 100, with like method steps being annotated with like numbers. The method 200 includes receiving an original image (video) signal having a series of original visual images where the original image (video) signal is encoded using a luminance level encoding transfer function (step 210). The original image (video) signal may be a movie or a video including a series of original visual image, which are perceivable to a human eye. The original image (video) signal may be luminance encoded using a PQ transfer function. The method 200 further includes receiving a watermark image signal having a watermark image (step 215). The method 200 may include modulating the watermark image by adjusting the polarity of the watermark image (step 217). The method 200 further includes adjusting a strength of the watermark image by a weighting factor, which is proportional to a predetermined number of quantized luminance level encoded steps (step 220). The strength of the watermark may be adjusted by adjusting the amplitude of the watermark signal. In particular, the method 200 may include adjusting a static force component 45 of the weighting factor, which is a first predetermined number of PQ steps (step 222), and adjusting a motion force component 50 of the weighting factor, which is proportional to a second number of PQ steps (step 224), where the second number of steps is related to image motion measured in a third number of PQ steps and where PQ steps are utilized so that the step size is proportional to the critical modulation level over the luminance range. The method 200 may further include embedding the adjusted watermark image signal into the original image (video) signal to create an embedded image signal (step 230). The method 200 may also include transmitting the embedded image signal to a playback device, such as a projector, a TV, a computer, or a smart device (step 235).

As will be understood, in some embodiments, one or more of these steps may not be performed, or contrarily additional steps may be performed. Furthermore, in some embodiments, one or more steps may be performed in different orders or may be executed simultaneously. Variations of the methods described may be performed in accordance with the rest of the disclosure. For example, the method 200 may not including the step of embedding the adjusted watermark signal into the original image signal (i.e., step 230). Rather, the method 200 may include the step of transmitting an original image signal and separately transmitting an adjusted watermark image signal.

### Exemplary systems for performing the digital watermark methods

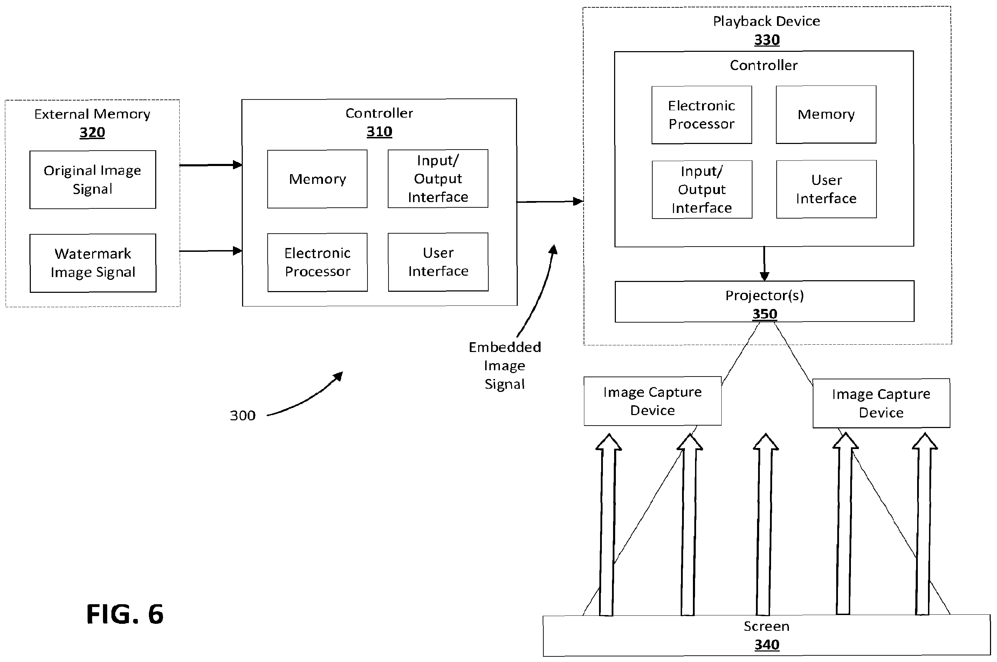

FIGS. 6-9 provide schematic diagrams of various systems configured to perform the methods described herein. These diagrams are intended to be exemplary embodiments in which various features may be interchangeable between exemplary embodiments to created additional embodiments.

FIG. 6 schematically illustrates a system 300 for creating a digital watermark according to the methods disclosed herein. The system includes a controller 310 in communication with an external memory source 320 and a playback device 330. The playback device may be a projector, a TV, a computer, a DVD player, a smart device, or any other device capable of displaying a series of visual images. The playback device may have one or more image transmission devices 350. The controller 310 is configured to receive an original image (video) signal having a series of original visual images and a watermark image signal having a watermark image from the external memory source 320. The controller 310 executes a method of creating a digital watermark, such as methods 100 and 200, and outputs an embedded image signal to a playback device 330. For example, the controller 310 may adjust the strength of the watermark proportional to a predetermined number of quantized steps, such as PQ steps. The controller 310 may then embed the adjusted watermark signal into the original image (video) signal and output the embedded image signal to the playback device 330. The embedded image signal may then be projected onto a screen 340 by the playback device 330.

In some embodiments, the controller 310 may receive one or both the original image (video) signal and the watermark image signal from an internal memory within the control unit or within the same computing device. In some embodiments, the controller may be a part of or integral with the playback device. Therefore, the controller may not always transmit an embedded image signal or an adjusted watermark signal to a playback device. Furthermore, in some embodiments, the controller may not embed the adjusted watermark signal into the original image signal to create an embedded image signal. Rather, in some embodiments, the controller may create an adjusted watermark signal and may transmit one or both the original image signal and the adjusted watermark image signal to a playback device. Similarly, the playback device may not always transmit an embedded image signal (i.e., a combined original image signal and watermark image signal) onto a screen. Instead, the playback device may overlay the original image signal and the adjusted watermark image signal. Additionally, in some embodiments, the playback device may include more than one projector or image transmission device to transmit the original image signal, the adjusted watermark image signal, and/or the embedded image signal.

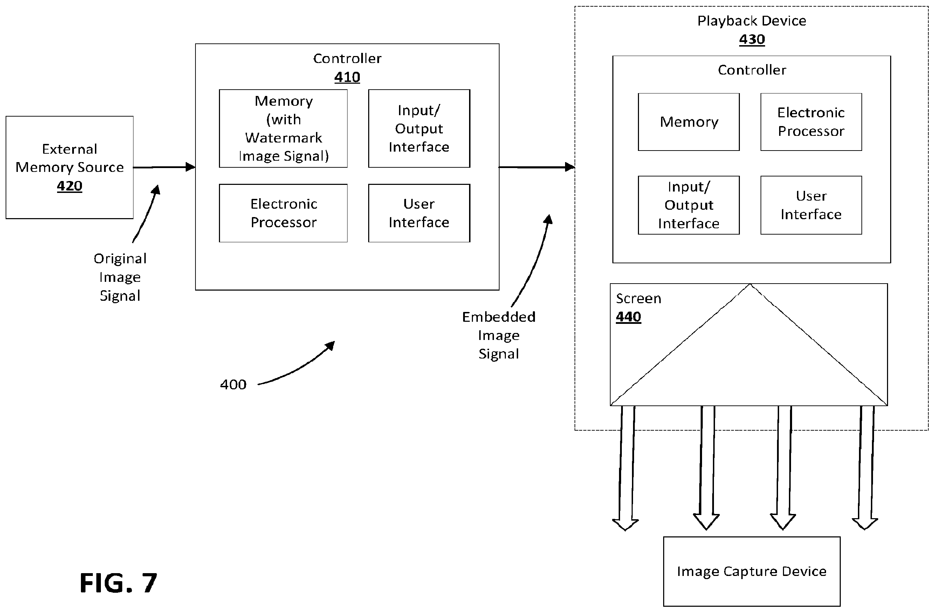

FIG. 7 schematically illustrates another system 400 for creating a digital watermark according to the methods disclosed herein. The system includes a controller 410 in communication with an external memory source 420 and a playback device 430. The playback device may be a projector, a TV, a computer, a DVD player, a smart device, or any other device capable of displaying a series of visual images. The controller 410 is configured to receive an original image (video) signal having a series of original visual images from the external memory source 420. The controller 410 also receives a watermark image signal having a watermark image from an internal memory source within the controller unit 410. The controller 410 executes a method of creating a digital watermark, such as methods 100 and 200, and outputs an embedded image signal to a playback device 430. For example, the controller 410 may adjust the strength of the watermark proportional to a predetermined number of quantized steps, such as PQ steps. The controller 410 may then embed the adjusted watermark signal into the original image (video) signal, and output the embedded image signal to the playback device 430. The embedded image signal may then be projected onto a screen 440 by the playback device 430.

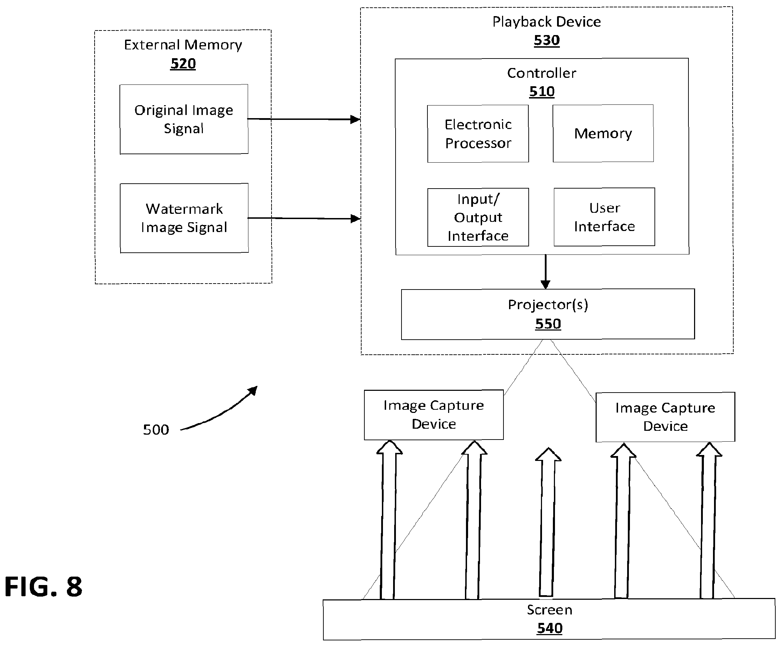

FIG. 8 schematically illustrates a system 500 for creating a digital watermark according to the methods disclosed herein. The system includes a controller 510 in communication with an external memory source 520. The controller 510 may be a part of or integral with a playback device 530 having one or more image transmission device 550. For example, the controller 510 may be a separate physical unit, which at least partially controls the playback device 530. The playback device may be a projector, a TV, a computer, a smart device, or any other device capable of displaying a series of visual images. The controller 510 is configured to receive an original image (video) signal having a series of original visual images and a watermark image signal having a watermark image from the external memory source 520. The controller 510 executes a method of creating a digital watermark, such as methods 100 and 200, and outputs an embedded image signal to the image transmission device 550 of the playback device. For example, the controller 510 may adjust the strength of the watermark proportional to a predetermined number of quantized steps, such as PQ steps. The controller 510 may then embed the adjusted watermark signal into the original image (video) signal and output the embedded image signal to the image transmission device 550. The embedded image signal may then be projected onto a screen 540 by the image transmission device 550.

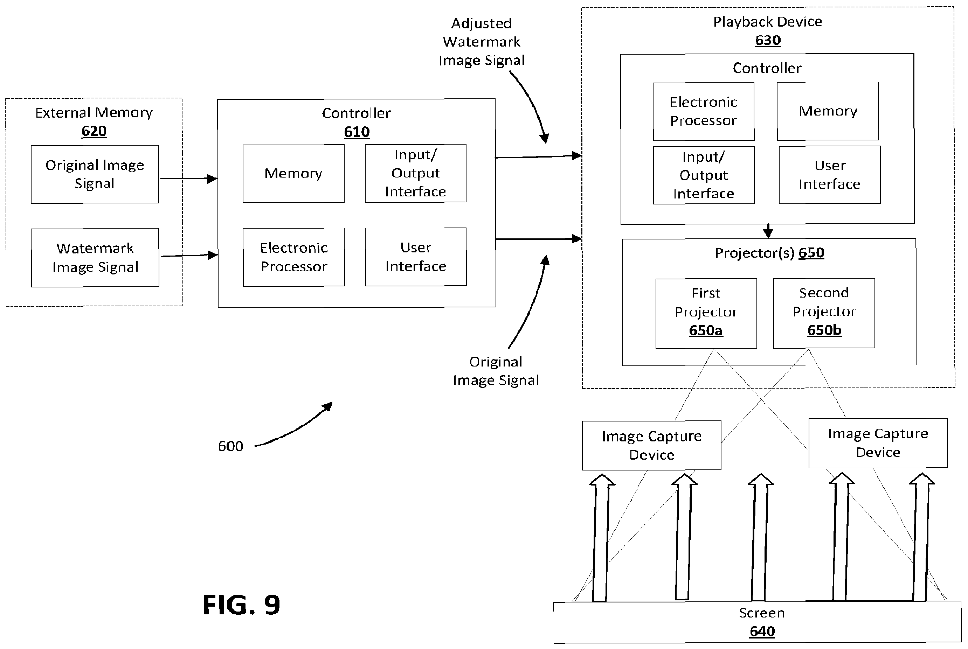

FIG. 9 schematically illustrates a system 600 for creating a digital watermark according to the methods disclosed herein. The system includes a controller 610 in communication with an external memory source 620 and a playback device 630. The playback device may be a projector, a TV, a computer, a DVD player, a smart device, or any other device capable of displaying a series of visual images. The playback device may have one or more image transmission device 650. The controller 610 is configured to receive an original image (video) signal having a series of original visual images and a watermark image signal having a watermark image from the external memory source 620. The controller 610 executes a method of creating a digital watermark, such as methods 100 and 200, in order to create an adjusted watermark signal. For example, the controller 610 may adjust the strength of the watermark proportional to a predetermined number of quantized steps, such as PQ steps. The controller 610 may then output the original image (video) signal and the adjusted watermark image signal to a playback device 630. In the illustrated embodiment, the controller 610 may output the original image (video) signal and the adjusted watermark image signal as two separate signals. The playback device 630 may then project the original image (video) signal and the adjusted watermark image signal onto a screen 640. For example, the playback device 630 may project the original image (video) signal onto a screen 640 using a first image transmission device 650a, such as a first projector. The playback device 630 may project the adjusted watermark image signal onto the screen 640 using a second imaged transmission device 650b, such as a second projector. In this embodiment, the projected original series of images and the projected watermark image may be overlaid on the screen 640.

The above systems and methods may provide for creating and adjusting a watermark.

Various features and advantages of the embodiments described herein are set forth in the following claims.

## Claims

1. A method for creating a digital watermark, comprising:
receiving, by an electronic processor, an original video signal containing a series of original visual images, the original video signal encoded using a perceptual quantizer (PQ) luminance level encoding transfer function resulting in PQ luminance steps within the original video signal, the PQ luminance steps having varying sizes across a luminance range;
receiving, by the electronic processor, a watermark image signal including a watermark; and
adjusting the strength of the watermark by adjusting the amplitude of the watermark image signal by at least a first weighting factor that is a predetermined first number of PQ luminance steps to cause the strength of the watermark to be proportional to the PQ luminance level transfer function over the luminance range.

2. The method of claim 1, where the luminance range spans from at least 0.001 nits to 1000 nits.

3. The method of any of claim 1 to 2, wherein the first weighting factor is the predetermined first number of PQ luminance steps over a luminance range of at least 0.01 nits to 50 nits.

4. The method of any of claims 1 to 3, wherein the first weighting factor comprises a static force weighting factor, the method further comprising adjusting the strength of the watermark by a second weighting factor, the second weighting factor comprising a motion force weighting factor.

5. The method of claim 4, wherein the second weighting factor is proportional to a second number of PQ luminance steps.

6. The method of claim 5, wherein the second number of PQ luminance steps is equal to a change in PQ steps between a first image in the series of original visual images and a second image in the series of original visual images.

7. The method of any of claims 1 to 6, further comprising embedding the adjusted watermark signal into the original video signal to create an embedded video signal, the embedded video signal including a series of marked visual images.

8. The method of claim 7, further comprising transmitting the embedded image signal to a playback device.

9. The method of any of claims 1 to 8, further comprising transmitting the adjusted watermark signal onto a screen.

10. The method of any one of the claims 1 to 9, further comprising modulating the adjusted watermark image by repeatedly changing the polarity of the adjusted watermark image.

11. A non-transitory computer-readable storage medium having stored thereon computer-executable instructions for executing a method with one or more processors in accordance with any of claims 1 to 10.

12. A system for creating a digital watermark, the system comprising:
a memory; and
a controller coupled to the memory and including a processor configured to
receive an original video signal containing series of original visual images, the original video signal encoded using a perceptual quantizer (PQ) luminance level encoding transfer function resulting in varying PQ luminance steps within the original video signal, the PQ luminance steps having varying sizes across a luminance range,
receive a watermark image signal including a watermark, and
adjust the strength of the watermark by adjusting the amplitude of the watermark image signal by at least a first weighting factor that is a predetermined first number of PQ luminance steps, to cause the strength of the watermark to be proportional to the PQ luminance level transfer function over the luminance range.

13. The system of claim 12, where the luminance range spans from at least 0.001 nits to 1000 nits.

14. The system of any of the claims 12 to 13, wherein the first weighting factor comprises a static force weighting factor and wherein the processor is further configured to adjust the strength of the watermark signal by a second weighting factor, the second weighting factor comprising a motion force weighting factor, and
wherein, optionally, the second weighting factor is proportional to a second number of PQ luminance steps, and
wherein, optionally, the second number of PQ luminance steps is equal to a change in quantized steps between a first image in the series of original visual images and a second image in the series of original visual images.

15. The system of any of claims 12 to 14, wherein the controller is further configured to embed the adjusted watermark signal into the original video signal to create an embedded video signal, the embedded video signal including a series of marked visual images.

## Patentansprüche

1. Verfahren zur Erzeugung eines digitalen Wasserzeichens, umfassend:
Empfangen, durch einen elektronischen Prozessor, eines ursprünglichen Videosignals, das eine Reihe von ursprünglichen visuellen Bildern enthält, wobei das ursprüngliche Videosignal unter Verwendung einer perzeptuellen Quantisierungs- (PQ) Luminanzpegel-Codierungsübertragungsfunktion codiert wird, was zu PQ-Luminanzschritten innerhalb des ursprünglichen Videosignals führt, wobei die PQ-Luminanzschritte über einen Luminanzbereich hinweg unterschiedliche Größen aufweisen;
Empfangen, durch den elektronischen Prozessor, eines Wasserzeichen-Bildsignals, das ein Wasserzeichen einschließt; und
Anpassen der Stärke des Wasserzeichens durch Anpassen der Amplitude des Wasserzeichen-Bildsignals durch mindestens einen ersten Gewichtungsfaktor, der einer vorbestimmten ersten Anzahl von PQ-Luminanzschritten entspricht, um zu bewirken, dass die Stärke des Wasserzeichens über den Luminanzbereich hinweg proportional zur PQ-Luminanzpegel-Übertragungsfunktion ist.

2. Verfahren nach Anspruch 1, wobei der Luminanzbereich von mindestens 0,001 cd/m² bis 1000 cd/m² reicht.

3. Verfahren nach einem der Ansprüche 1 bis 2, wobei der erste Gewichtungsfaktor die vorbestimmte erste Anzahl von PQ-Luminanzschritten über einen Luminanzbereich von mindestens 0,01 cd/m² bis 50 cd/m² ist.

4. Verfahren nach einem der Ansprüche 1 bis 3, wobei der erste Gewichtungsfaktor einen Gewichtungsfaktor für statische Kräfte umfasst, wobei das Verfahren ferner Anpassen der Stärke des Wasserzeichens durch einen zweiten Gewichtungsfaktor umfasst, wobei der zweite Gewichtungsfaktor einen Gewichtungsfaktor für Bewegungskräfte umfasst.

5. Verfahren nach Anspruch 4, wobei der zweite Gewichtungsfaktor proportional zu einer zweiten Anzahl von PQ-Luminanzschritten ist.

6. Verfahren nach Anspruch 5, wobei die zweite Anzahl von PQ-Luminanzschritten gleich der Änderung der PQ-Schritten zwischen einem ersten Bild in der Reihe der ursprünglichen visuellen Bilder und einem zweiten Bild in der Reihe der ursprünglichen visuellen Bilder ist.

7. Verfahren nach einem der Ansprüche 1 bis 6, ferner umfassend Einbetten des angepassten Wasserzeichensignals in das ursprüngliche Videosignal, um ein eingebettetes Videosignal zu erzeugen, wobei das eingebettete Videosignal eine Reihe markierter visueller Bilder einschließt.

8. Verfahren nach Anspruch 7, ferner umfassend Übertragen des eingebetteten Bildsignals an eine Wiedergabevorrichtung.

9. Verfahren nach einem der Ansprüche 1 bis 8, ferner umfassend Übertragen des angepassten Wasserzeichensignals auf einen Bildschirm.

10. Verfahren nach einem der Ansprüche 1 bis 9, ferner umfassend Modulieren des angepassten Wasserzeichenbildes durch wiederholtes Ändern der Polarität des angepassten Wasserzeichenbildes.

11. Nicht-transistorisches, computerlesbares Speicherungsmedium, das darauf gespeicherte computerausführbare Anweisungen zum Ausführen eines Verfahrens mit einem oder mehreren Prozessoren nach einem der Ansprüche 1 bis 10 aufweist.

12. System zur Erzeugung eines digitalen Wasserzeichens, das System umfassend:
einen Speicher; und
eine Steuereinheit, die mit dem Speicher gekopppelt ist und einen Prozessor einschließt, der konfiguriert ist zum
Empfangen eines ursprünglichen Videosignals, das eine Reihe von ursprünglichen visuellen Bildern enthält, wobei das ursprüngliche Videosignal unter Verwendung einer perzeptuellen Quantisierungs- (PQ) Luminanzpegel-Codierungsübertragungsfunktion codiert wird, was zu variierenden PQ-Luminanzschritten innerhalb des ursprünglichen Videosignals führt, wobei die PQ-Luminanzschritte über einen Luminanzbereich hinweg unterschiedliche Größen aufweisen;
Empfangen eines Wasserzeichen-Bildsignals, das ein Wasserzeichen einschließt; und
Anpassen der Stärke des Wasserzeichens durch Anpassen der Amplitude des Wasserzeichen-Bildsignals durch mindestens einen ersten Gewichtungsfaktor, der einer vorbestimmten ersten Anzahl von PQ-Luminanzschritten entspricht, um zu bewirken, dass die Stärke des Wasserzeichens über den Luminanzbereich hinweg proportional zur PQ-Luminanzpegel-Übertragungsfunktion ist.

13. System nach Anspruch 12, wobei der Luminanzbereich von mindestens 0,001 cd/m² bis 1000 cd/m² reicht.

14. System nach einem der Ansprüche 12 bis 13, wobei der erste Gewichtungsfaktor einen Gewichtungsfaktor für statische Kräfte umfasst und wobei der Prozessor ferner so konfiguriert ist, dass er die Stärke des Wasserzeichensignals durch einen zweiten Gewichtungsfaktor anpasst, wobei der zweite Gewichtungsfaktor einen Gewichtungsfaktor für Bewegungskräfte umfasst, und
wobei der zweite Gewichtungsfaktor optional proportional zu einer zweiten Anzahl von PQ-Luminanzschritten ist, und
wobei optional die zweite Anzahl von PQ-Luminanzschritten gleich der Änderung der quantisierten Schritte zwischen einem ersten Bild in der Reihe der ursprünglichen visuellen Bilder und einem zweiten Bild in der Reihe der ursprünglichen visuellen Bilder ist.

15. System nach einem der Ansprüche 12 bis 14, wobei die Steuereinheit ferner so konfiguriert ist, dass sie das angepasste Wasserzeichensignal in das ursprüngliche Videosignal einbettet, um ein eingebettetes Videosignal zu erzeugen, wobei das eingebettete Videosignal eine Reihe markierter visueller Bilder einschließt.

## Revendications

1. Procédé de création d'un filigrane numérique, comprenant :
la réception, par un processeur électronique, d'un signal vidéo d'origine contenant une série d'images visuelles d'origine, le signal vidéo d'origine étant encodé à l'aide d'une fonction de transfert d'encodage de niveau de luminance par quantificateur perceptuel (PQ) ayant pour résultat des étapes de luminance par PQ variables dans le signal vidéo d'origine, les étapes de luminance par PQ présentant des tailles variables sur une plage de luminance ;
la réception, par le processeur électronique, d'un signal d'image de filigrane incluant un filigrane ; et
l'ajustement de la résistance du filigrane en ajustant l'amplitude du signal d'image de filigrane par au moins un premier facteur de pondération qui est un premier nombre prédéterminé d'étapes de luminance par PQ pour amener la résistance du filigrane à être proportionnelle à la fonction de transfert de niveau de luminance par PQ sur la plage de luminance.

2. Procédé selon la revendication 1, dans lequel la plage de luminance s'étend d'au moins 0,001 nits à 1 000 nits.

3. Procédé selon l'une quelconque des revendications 1 à 2, dans lequel le premier facteur de pondération est le premier nombre prédéterminé d'étapes de luminance par PQ sur une plage de luminance d'au moins 0,01 nits à 50 nits.

4. Procédé selon l'une quelconque des revendications 1 à 3, dans lequel le premier facteur de pondération comprend un facteur de pondération de force statique, le procédé comprenant en outre l'ajustement de la résistance du filigrane par un second facteur de pondération, le second facteur de pondération comprenant un facteur de pondération de force de mouvement.

5. Procédé selon la revendication 4, dans lequel le second facteur de pondération est proportionnel à un second nombre d'étapes de luminance par PQ.

6. Procédé selon la revendication 5, dans lequel le second nombre d'étapes de luminance par PQ est égal à un changement d'étapes de PQ entre une première image de la série d'images visuelles d'origine et une seconde image de la série d'images visuelles d'origine.

7. Procédé selon l'une quelconque des revendications 1 à 6, comprenant en outre l'intégration du signal de filigrane ajusté dans le signal vidéo d'origine pour créer un signal vidéo intégré, le signal vidéo intégré incluant une série d'images visuelles marquées.

8. Procédé selon la revendication 7, comprenant en outre la transmission du signal d'image intégré à un dispositif de lecture.

9. Procédé selon l'une quelconque des revendications 1 à 8, comprenant en outre la transmission du signal de filigrane ajusté sur un écran.

10. Procédé selon l'une quelconque des revendications 1 à 9, comprenant en outre la modulation de l'image de filigrane ajustée en changeant de manière répétée la polarité de l'image de filigrane ajustée.

11. Support de stockage non transitoire lisible par ordinateur sur lequel sont stockées des instructions exécutables par ordinateur pour exécuter un procédé avec un ou plusieurs processeurs selon l'une quelconque des revendications 1 à 10.

12. Système de création d'un filigrane numérique, le système comprenant :
une mémoire ; et
un dispositif de commande couplé à la mémoire et incluant un processeur configuré pour
recevoir un signal vidéo d'origine contenant une série d'images visuelles d'origine, le signal vidéo d'origine étant encodé à l'aide d'une fonction de transfert d'encodage de niveau de luminance par quantificateur perceptuel (PQ), ayant pour résultat des étapes de luminance par PQ variables dans le signal vidéo d'origine, les étapes de luminance par PQ ayant des tailles variables sur une plage de luminance,
recevoir un signal d'image de filigrane incluant un filigrane, et
ajuster la résistance du filigrane en ajustant l'amplitude du signal d'image de filigrane par au moins un premier facteur de pondération qui est un premier nombre prédéterminé d'étapes de luminance par PQ, pour amener la résistance du filigrane à être proportionnelle à la fonction de transfert de niveau de luminance par PQ sur la plage de luminance.

13. Système selon la revendication 12, dans lequel la plage de luminance s'étend d'au moins 0,001 nits à 1 000 nits.

14. Système selon l'une quelconque des revendications 12 à 13, dans lequel le premier facteur de pondération comprend un facteur de pondération de force statique et dans lequel le processeur est en outre configuré pour ajuster la résistance du signal de filigrane par un second facteur de pondération, le second facteur de pondération comprenant un facteur de pondération de force de mouvement, et
dans lequel, facultativement, le second facteur de pondération est proportionnel à un second nombre d'étapes de luminance par PQ, et
dans lequel, facultativement, le second nombre d'étapes de luminance par PQ est égal à un changement d'étapes quantifiées entre une première image de la série d'images visuelles d'origine et une seconde image de la série d'images visuelles d'origine.

15. Système selon l'une quelconque des revendications 12 à 14, dans lequel le dispositif de commande est en outre configuré pour intégrer le signal de filigrane ajusté dans le signal vidéo d'origine pour créer un signal vidéo intégré, le signal vidéo intégré incluant une série d'images visuelles marquées.
